Europäisches Patentamt

European Patent Office

Office européen des brevets

(11) Veröffentlichungsnummer: **0 109 565**
A2

(12) # EUROPÄISCHE PATENTANMELDUNG

(21) Anmeldenummer: 83110492.2

(22) Anmeldetag: 21.10.83

(51) Int. Cl.³: **B 43 L 1/06**
A 47 G 1/06, A 47 G 1/10
G 09 F 19/00

(30) Priorität: 26.10.82 DE 8229962 U

(43) Veröffentlichungstag der Anmeldung:
30.05.84 Patentblatt 84/22

(84) Benannte Vertragsstaaten:
AT BE CH DE FR GB IT LI LU NL SE

(71) Anmelder: Weyel KG
Rodenbacher Strasse Postfach 68
D-6342 Haiger/Hessen(DE)

(72) Erfinder: Winn, Klaus
Krofdorfer Strasse 138
D-6300 Giessen(DE)

(72) Erfinder: Engelbach, Karl-Ludwig
Jahnstrasse 9
D-6340 Dillenburg 2(DE)

(74) Vertreter: Schlee, Richard et al,
Patentanwälte Dipl.-Ing. R. Schlee Dipl.-Ing. A. Missling
Bismarckstrasse 43
D-6300 Giessen 1(DE)

(54) Tafel für Lehrzwecke.

(57) Die Tafel hat einen den gesamten Tafelkörper umgebenden Rahmen aus Profilen (P). Die Profile (P) bilden einen Innenrahmen (13), der an eine Tafelfüllung angrenzt und mit z.B. beschriftbaren Nutzschichten (9, 10) verklebt ist. Die Profile (P) bilden auch einen Außenrahmen (14, 15), der die Randbereiche der Nutzschichten (9, 10) übergreift.

Durch diese Rahmenkonstruktion sind die Herstellungskosten für die Tafel gering. Auch wird bei geringem Tafelgewicht eine große Stabilität erreicht. Unerwünschte Markierungen an den Nutzflächen werden vermieden.

Fig. 2

EP 0 109 565 A2

Patentanwälte

Dipl.-Ing. Richard Schlee
Dipl.-Ing. Arne Missling

0109565

6300 Lahn-Giessen 1    19.10.1983
Bismarckstrasse 43
Telefon: (0641) 71019

S/B 14.709

Weyel KG

6342 Haiger

## Tafel für Lehrzwecke

Die Erfindung bezieht sich auf eine Tafel für Lehrzwecke, mit einem Tafelkern, der eine Tafelfüllung aus relativ leichtem, auch nachgiebigem Material und einen die Tafelfüllung umgebenden Innenrahmen aus relativ festem Material aufweist, mindestens einer mit dem Tafelkern verklebten Nutzschicht und einem Außenrahmen, der den Tafelkern und die Nutzschicht umgibt.

Bei einer bekannten Tafel dieser Art hat die Nutzschicht (in der Regel ist an jeder Seite des Tafelkernes eine Nutzschicht angeordnet) etwa den gleichen Umriß wie der Tafelkern. Der Tafelkern besteht häufig aus Wabenpapier oder aufgeschäumtem Kunststoff und der Innenrahmen aus Holz. Zunächst werden die Nutzschichten, z.B. ein emailliertes Stahlblech oder eine Schichtplatte mit Kunststoff, mit dem Tafelkern durch Verkleben oder Verleimen verbunden. Hierbei werden die Nutzschichten unter gleichzeitiger Anwendung von Wärme an den Tafelkern angepreßt. Hierbei kann sich der Innenrahmen durch sogenannte Markierungen an den Oberflächen der Nutzschichten unerwünschterweise abzeichnen. Nach der Verbindung der Nutzschichten mit dem Tafelkern werden am Tafelkörper Randleisten angebracht, die die Stirnflächen des Tafelkernes und die Randbereiche der Nutzschichten umgreifen. Die Randleisten stoßen an den Ecken der Tafel an

- 2 -

Gehrungsschnitten oder auch stumpf aneinander und sind mit dem Tafelkörper durch Schrauben verbunden, deren Köpfe sichtbar bleiben. Nachteilig bei dieser Tafelkonstruktion ist neben den bereits erwähnten Markierungen die aufwendige Herstellung.

Bekannt sind auch Tafelkonstruktionen, bei der der Tafelkern aus einer Spanplatte besteht und Randleisten einen Steg aufweisen, der in eine Nut der Spanplatte eingreift und in dieser verleimt ist. Solche Tafeln haben ein sehr hohes Gewicht, was im Hinblick auf die Handhabung der Tafel und im Hinblick auf ihre Aufhängung nachteilig ist. Ferner sind Tafeln bekannt, bei denen der Tafelkern zusätzlich zu einer Tafelfüllung und einem Innenrahmen eine äußere Beplankung aufweist. Ein solcher Aufbau des Tafelkernes wird vor allem bei Tafeln mit Schreibflächen aus Glas angewendet und ist sehr teuer.

Der Erfindung liegt die Aufgabe zugrunde, eine Tafel der eingangs genannten Art so auszubilden, daß der Arbeitsaufwand für die Herstellung der Tafel gering ist, wobei eine große Stabilität der Tafel bei geringem Tafelgewicht erreicht werden soll und die Gefahr von Markierungen an den Nutzflächen vermieden werden soll.

Diese Aufgabe wird nach der Erfindung dadurch gelöst, daß der Innenrahmen und der Außenrahmen durch gleiche Rahmenprofile gebildet werden, die zur Bildung des Innenrahmens einen Innenrahmenteil aufweisen, der an die Tafelfüllung angrenzt und der mit der Nutzschicht verklebt ist und zur Bildung des Außenrahmens Schenkel aufweisen, die den Randbereich der Nutzschicht übergreifen.

Durch die Bildung von Innenrahmen und Außenrahmen durch die gleichen Profile wird ein wesentlich einfacherer Gesamtaufbau der Tafel erzielt. Der Innenrahmen hat bei der erfindungsgemäßen Tafel ein geringeres Gewicht, als dies bei Tafeln der eingangs genannten Art der Fall ist, wodurch eine Reduzierung des Gesamtgewichtes der Tafel um etwa 30 % erreicht wird. Markierungen werden deshalb vermieden, weil ein Verpressen mit einem Tafelkern, der einen relativ festen Rahmen und eine relativ weiche Füllung aufweist, nicht stattfindet. Die Herstellung wird wesentlich vereinfacht, da nicht, wie bisher, zwei Rahmen je für sich hergestellt werden müssen, sondern beide Rahmen mit einem Arbeitsaufwand entstehen, wie er bisher für die Anbringung des Außenrahmens erforderlich war.

Vorzugsweise sind die Rahmen Strangpreßprofile aus Aluminium oder Kunststoff (Anspruch 2).

Vorzugsweise erstreckt sich die Anlagefläche zwischen Nutzschicht und Innenrahmenteil nur über einen Teil der Breite desselben (Anspruch 3). Dies hat unter anderem den Vorteil, daß Relativbewegungen zwischen den miteinander verbundenen Flächen in Grenzen gehalten werden. Insbesondere bei der Kombination von Nutzflächen aus Stahlblech mit Rahmenprofilen aus Aluminium sind die Wärmedehnungen stark verschieden, weshalb große Anlageflächen nicht erwünscht sind.

Zur besseren Haftung können an den Anlageflächen des Innenrahmenteiles Unebenheiten gemäß Anspruch 4 vorgesehen werden. Zur Verbindung der Nutzschicht mit den Rahmenprofilen dient vorzugsweise ein elastisches Klebemittel (Anspruch 5). Dadurch kann man auch bei großen Tafeln unterschiedliche Wärmedehnungen der miteinander verbundenen Materialien zulassen, ohne daß die Gefahr einer Ablösung besteht. Die Verbindung der Nutzschicht mit dem Tafelkern hingegen kann mit einem weniger elastischen Kleber oder Leim erfolgen (Anspruch 6).

Gemäß Anspruch 7 haben die Rahmenprofile vorzugsweise Nuten, die für verschiedene Verwendungszwecke geeignet sind. In den Nuten können Tafelbeschläge, wie z.B. Scharniere, Befestigungselemente und Griffe befestigt werden. Ferner können die Nuten für die Halterung von Ausrüstungsteilen benutzt werden.So können in den Nuten Bilderklemmen, Flipchart-Halterungen und Kreideablagen verankert werden.

Die Erfindung eignet sich insbesondere für Tafeln mit Nutzflächen aus emailliertem Stahlblech und für Nutzflächen aus Kunststoff enthaltenden Schichtplatten (Ansprüche 8 und 9), d.h. für Tafeln, bei denen die Nutzschichten relativ dünn sind. Die Tafelfüllung kann in bekannter Weise aus Wabenpapier oder aus aufgeschäumtem Kunststoff bestehen (Anspruch 10).

Besonders vorteilhaft im Zusammenhang mit der Erfindung ist eine Rahmenkonstruktion mit Eckstücken, die an die Enden von rechtwinklig abgeschnittenen Rahmenprofilen anschließen (Anspruch 11). Dies gestattet die Herstellung stark abgerundeter Eckbereiche der Tafel, wodurch Verletzungsgefahr vermieden und ein vorteilhaftes Aussehen erreicht wird (Anspruch 12). Die Erfindung ist jedoch nicht auf Tafeln mit einem Rahmen mit Eckstücken begrenzt, sondern umfaßt auch Tafeln, bei denen die Rahmenprofile auf Gehrung aneinanderstoßen.

Die Eckstücke können aus Kunststoff oder aus Zink oder aus Aluminium bestehen (Anspruch 13). Sie können gemäß Anspruch 14 Zapfen aufweisen, die in die Rahmenprofile eingesteckt sind.

Die Eckstücke können auch direkt die Verbindungsteile bilden, mit denen die Rahmenprofile miteinander verbunden sind. Besonders vorteilhaft jedoch sind für diese Verbindung Eckwinkel, deren Schenkel in die zu verbindenden Profile eingreifen (Anspruch 15). Dadurch erhält man eine in besonderem Maße stabile Eckverbindung. Eine solche Eckverbindung kann mit Eckstücken kombiniert sein, die dann die Eckbereiche der Eckwinkel umhüllen, so daß die Eckwinkel unsichtbar sind.

- 5 -

In der Zeichnung ist ein Ausführungsbeispiel der Erfindung dargestellt. Es zeigen:

Fig. 1 eine Vorderansicht einer Tafel,

Fig. 2 einen Schnitt nach Linie II-II in Fig. 1 in einem gegenüber Fig. 1 vergrößerten Maßstab,

Fig. 3 einen Ausschnitt aus der Tafel nach Fig. 1 im Bereich des strichpunktierten Kreises III in Fig. 1 in einem gegenüber Fig. 1 vergrößerten Maßstab, wobei der Eckbereich in einer Schnittebene geschnitten ist, die parallel zur Tafelfläche verläuft und gegenüber dieser versetzt ist,

Fig. 4 eine perspektivische Ansicht einer Tafelecke und

Fig. 5 eine Ansicht eines Eckstückes.

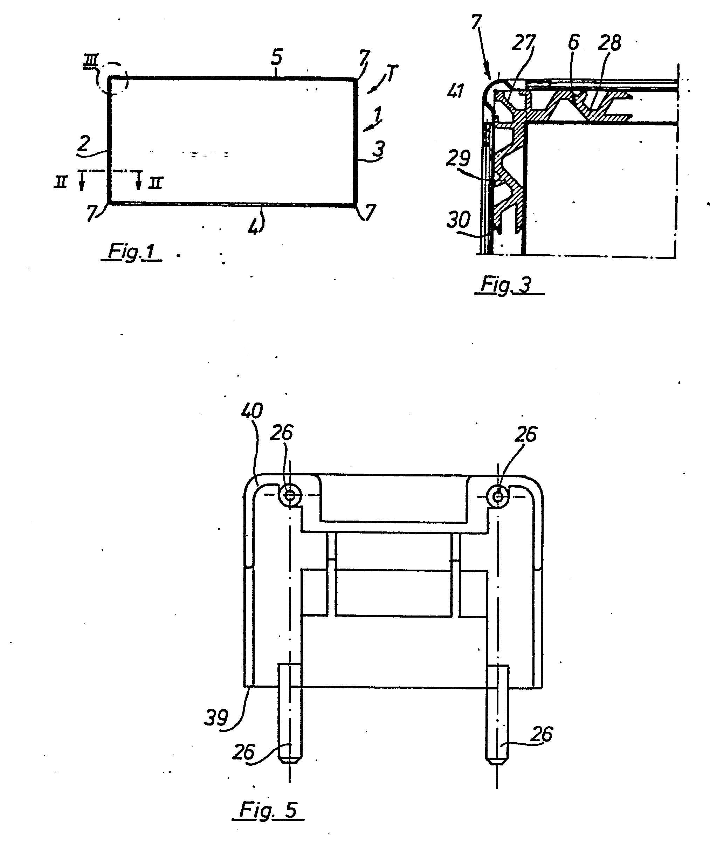

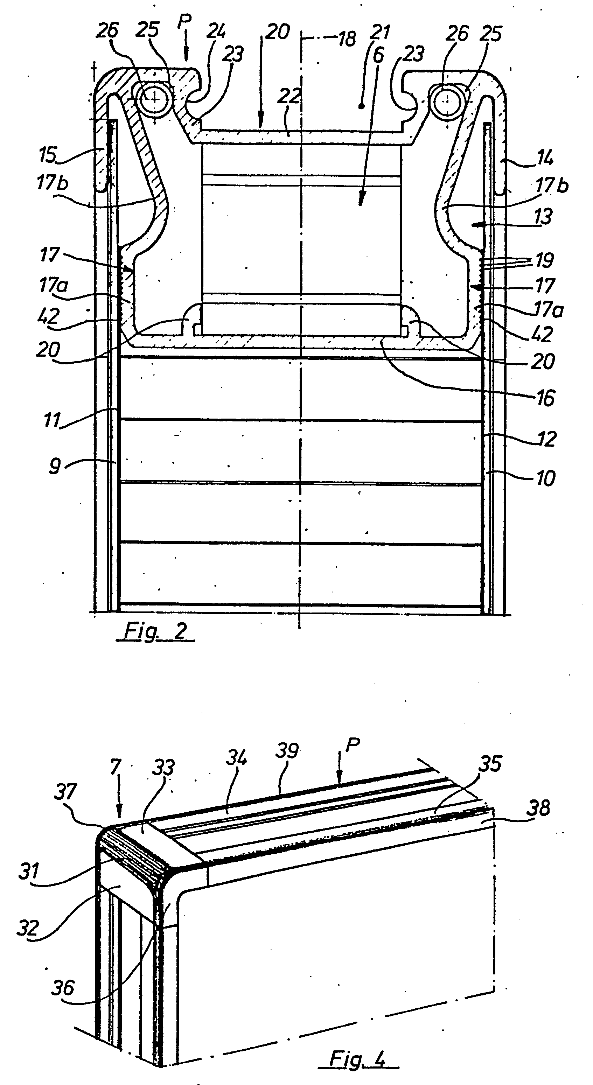

Die insgesamt mit T bezeichnete Tafel hat einen insgesamt mit 1 bezeichneten Rahmen, der aus vertikalen Profilen 2, 3, horizontalen Profilen 4, 5, Eckwinkeln 6 und Eckstücken 7 zusammengesetzt ist. Der Schichtaufbau der Tafel ist aus Fig. 2 ersichtlich. Die Tafel hat eine Tafelfüllung 8, die aus Wabenpapier besteht und mit der Tafelfüllung 8 verklebte oder verleimte Nutzschichten 9 und 10. Im folgenden wird zwischen Verklebung und Verleimung nicht mehr unterschieden, sondern nur noch von Verklebung gesprochen. Dieser Begriff soll nicht ausschließen, daß Leime verwendet werden können.

Im vorliegenden Fall sei angenommen, daß die Nutzschichten 9, 10 aus emailliertem Stahlblech bestehen. Die Emaillierung kann

- 6 -

rauh sein und ist dann besonders für die Beschriftung mit
Kreide geeignet. Wenn die Tafel mit Filzstiften beschriftet werden soll, wird eine glatte Emailfläche verwendet.
Auch andere dünne Platten eignen sich als Nutzschichten,
so insbesondere Schichtplatten mit Kunststoff und Verstärkungseinlagen, z.B. Schichtplatten, wie sie unter dem
eingetragenen Warenzeichen Resopal bekannt sind. Die Nutzschichten 9, 10 sind mit der Tafelfüllung 8 verklebt. Kleberschichten 11, 12 sind in Fig. 2 angedeutet.

Die Tafelfüllung 8 reicht nicht bis zu den Rändern der Nutzschichten 9,10, sondern ist gegenüber diesen Rändern weit zurückgesetzt. Der Raum zwischen den Nutzschichten 9, 10, der
nicht von der Tafelfüllung 8 ausgefüllt ist, ist weitgehend
von den Rahmen 1 bildenden Rahmenprofilen P ausgefüllt.

Alle Rahmenprofile 2 bis 5 haben einen gleichen Querschnitt,
wie er in Fig. 2 vergrößert dargestellt ist. Dieser Profilquerschnitt soll nachfolgend betrachtet werden. Das Profil
P hat einen insgesamt mit 13 bezeichneten Innenrahmenteil,
der zwischen die Nutzschichten 9, 10 eingreift und Schenkel
14, 15, die die Randbereiche der Nutzschichten 9, 10 von
außen her übergreifen. Der Innenrahmenteil 13 hat eine Innenwand 16 und Seitenwände 17. Der Profilquerschnitt ist
zu der Mittelebene 18 symmetrisch. Die Seitenwände 17 haben
ebene Bereiche 17a, die Anlageflächen für die Nutzschichten
9, 10 bilden und nach innen gekrümmte Bereiche 17b. An
den Außenflächen der Wandbereiche 17a befinden sich Rillen
19, die parallel zur Längsrichtung der Profile verlaufen.
Die Wandteile 17b sind nach innen ausgewölbt und haben dementsprechend keine Berührung mit den Nutzschichten 9, 10.
Von der Innenwand 16 erheben sich Leisten 20, die zur Zentrierung der bereits erwähnten Eckwinkel 6 dienen.

Die gekrümmten Wandbereiche 17b gehen in eine insgesamt mit
20 bezeichnete Außenwand über. Die Außenwand 20 hat eine breite Nut 21, die durch einen langen geraden Teil 22 des Profilquerschnittes begrenzt ist. In den Seitenwänden 23 der Nut befinden sich rinnenförmige Vertiefungen 24. Die Nut 21 in Verbindung mit den rinnenförmigen Vertiefungen 24 dient zur Befestigung von Tafelbeschlägen.

Zwischen den Seitenwänden 23 der Nut 21 und den Wandteilen 17b des Innenrahmenteiles befinden sich Zwischenräume 25 für den Eingriff von Zapfen 26 der Eckstücke 7.

Die Außenflächen der Wandteile 17a des Innenrahmenteiles liegen näher beieinander als die Innenflächen der Schenkel 14, 15, so daß ebene Nutzschichten 9, 10 hinter die Schenkel 14, 15 greifen können.

Die Profile P sind Strangpreßprofile aus Aluminium.

Die Eckwinkel 6 bestehen vorzugsweise aus Aluminium und haben einen Eckbereich 27 (siehe Fig. 3) und Schenkel 28, 29. An den vorderen Enden der Schenkel befinden sich Einführschrägen 30. Der Querschnitt der Eckwinkel ist so bemessen, daß die Seitenflächen der Schenkel 28, 29 zwischen die Leisten 20 der Profile P passen (siehe Fig. 2). Die Passung insgesamt ist so gewählt, daß die Eckwinkel einen festen Sitz in den Profilen P haben. Der Eckbereich 27 eines jeden Eckwinkels ist unsichtbar, da er von einem Eckstück 7 umgeben ist, das ohne Zwischenraum an die rechtwinklig abgeschnittenen Enden der Rahmenprofile anschließt. Die Beschaffenheit der Eckstücke soll nachfolgend anhand der Fig. 5 und 6 betrachtet werden.

Jeder Eckwinkel hat eine Abrundungsfläche 31, die z.B. als Viertelzylinder ausgebildet sein kann und die stufenlos in ebene Flächen 32, 33 übergeht. Diese ebenen Flächen ihrerseits schließen stufenlos an Flächen 34, 35 der Rahmenprofile P an. Rechtwinklig zu den Flächen 32, 33 orientierte Seitenflächen 36, 37 gehen stufenlos in die Seitenflächen 38, 39 der Profile P über. Die Profile P sind, wie gesagt, rechtwinklig abgeschnitten und stoßen stumpf an die Enden des Eckstückes 7 an.

Das Eckstück 7 hat (siehe Fig. 5) insgesamt vier Zapfen 26, die von den Endflächen 39, 40 des Eckstückes abragen und die in die Profile so eingreifen, wie dies bereits anhand der Fig. 2 erläutert wurde. Die Eckstücke sind so ausgespart, daß im Hohlraum 41 die Eckbereiche 27 der Eckwinkel 6 Platz finden (siehe Fig. 3).

Bei der Herstellung der Tafel wird wie folgt vorgegangen. Zunächst werden die Nutzschichten 9, 10 mit der Tafelfüllung 8 durch Klebung verbunden, wobei ein gewisser Druck unter gleichzeitiger Einwirkung von Wärme aufgewendet wird. Anschließend daran wird der Rahmen 1 montiert. Hierbei werden zunächst die Wandteile 17a außen mit einem elastischen Kleber 42 bestrichen, der sich mit den Innenseiten der Nutzschichten 9, 10 verbindet. Gleichzeitig mit dem Einschieben der Profile P zwischen die Nutzschichten 9, 10 werden auch die Eckverbindungteile in die Profile eingeschoben. Die so hergestellten Tafeln werden aufeinandergelegt, wobei der Stapeldruck genügt, um während der Aushärtungszeit des Klebers 42 einen ausreichend festen Kontakt zwischen den zu verbindenden Teilen aufrecht zu erhalten.

Alternativ zu der beschriebenen Art der Herstellung kann wie folgt vorgegangen werden. Zunächst wird auf die Nutzschichten 9, 10 und/oder die Tafelfüllung 8 ein Klebemittel aufgetragen. Anschließend werden die Profile P, nachdem ihre Wandteile 17a mit Kleber beschichtet wurden, zwischen die Nutzschichten 9, 10 zur Bildung des Rahmens eingeführt. Die so zusammengefügte Tafel wird in eine Heizpresse eingebracht oder unter dem Stapeldruck ausgehärtet.

Wie Fig. 2 zeigt, erstreckt sich die Anlage der Nutzschichten 9, 10 an den Profilen P nur über einen Teil der Höhe der Innenrahmenteile der Profile. Dadurch wird die Berührungsfläche gering gehalten, so daß die unterschiedliche Wärmedehnung zwischen den Materialien der Profile P und den Materialien der Nutzschichten 9, 10 nicht zu so großen gegenseitigen Verschiebungen führt, daß sich die Teile voneinander lösen. Die Fig. 1 und 4 zeigen, daß die Tafel insgesamt ein vorteilhaftes Aussehen hat, insbesondere auch durch die Verwendung von besonderen Eckstücken 7, die Abrundungsflächen 31 mit großem Krümmungsradius aufweisen.

- 1 -

**Ansprüche:**

1. Tafel für Lehrzwecke mit einem Tafelkern, der eine Tafelfüllung aus relativ leichtem, auch nachgiebigem Material und einen die Tafelfüllung umgebenden Innenrahmen aus relativ festem Material aufweist,mindestens einer mit dem Tafelkern verklebten Nutzschicht und einem Außenrahmen, der den Tafelkern und die Nutzschicht umgibt, dadurch gekennzeichnet, daß der Innenrahmen und der Außenrahmen durch gleiche Rahmenprofile (P) gebildet werden, die zur Bildung des Innenrahmens einen Innenrahmenteil (13) aufweisen, der an die Tafelfüllung (8) angrenzt und der mit der Nutzschicht (9, 10) verklebt ist und zur Bildung des Außenrahmens Schenkel (14, 15) aufweisen, die den Randbereich der Nutzschicht (9, 10) übergreifen.

2. Tafel nach Anspruch 1, dadurch gekennzeichnet, daß die Rahmenprofile (P) stranggepreßte Teile sind, vorzugsweise aus Aluminium oder Kunststoff.

3. Tafel nach einem der vorhergehenden Ansprüche, dadurch gekennzeichnet, daß die mit der Nutzschicht (9, 10) verbundenen Anlageflächen (17a) des Innenrahmenteiles (13) einen Abstand vom Rand der Nutzschicht (9, 10) haben, vorzugsweise derart, daß die Breite der Anlageflächen (17a) kleiner ist als die Hälfte der Breite des Innenrahmenteiles (13).

4. Tafel nach einem der vorhergehenden Ansprüche, dadurch gekennzeichnet, daß die mit der Nutzschicht (9, 10) verbundenen Anlageflächen (17a) des Innenrahmenteiles (13) Unebenheiten aufweisen, vorzugsweise in Längsrichtung der Profile (P) verlaufende Rillen (19).

5. Tafel nach einem der vorhergehenden Ansprüche, dadurch gekennzeichnet, daß die Nutzschicht (9, 10) mit den Rahmenprofilen (P) durch ein elastisches Klebemittel (42) verbunden ist.

6. Tafel nach einem der vorhergehenden Ansprüche, dadurch gekennzeichnet, daß die Nutzschicht (9, 10) mit der Tafelfüllung (8) durch ein Klebemittel (11, 12) verbunden ist, das weniger elastisch ist als das Klebemittel (11, 12) zur Verbindung der Nutzschicht (9, 10) mit den Innenrahmenteilen (13) der Rahmenprofile (P).

7. Tafel nach einem der vorhergehenden Ansprüche, dadurch gekennzeichnet, daß die Rahmenprofile (P) Nuten (21) für die Befestigung von Tafelbeschlägen, z.B. von Scharnieren, Befestigungselementen und Griffen und für die Befestigung von Ausrüstungsteilen, z.B. von Bilderklemmen, Flipchart-Halterungen und Kreideablagen aufweisen.

8. Tafel nach einem der vorhergehenden Ansprüche, dadurch gekennzeichnet, daß mindestens eine Nutzfläche (9, 10) durch ein mit Emaille beschichtetes Stahlblech gebildet wird.

9. Tafel nach einem der vorhergehenden Ansprüche, dadurch gekennzeichnet, daß mindestens eine Nutzfläche (9, 10)

– 3 –

durch eine Kunststoff enthaltende Schichtplatte gebildet wird.

10. Tafel nach einem der vorhergehenden Ansprüche, dadurch gekennzeichnet, daß die Tafelfüllung (8) aus einer Platte aus Wabenpapier oder aus aufgeschäumtem Kunststoff besteht.

11. Tafel nach einem der vorhergehenden Ansprüche, dadurch gekennzeichnet, daß an den Ecken der Tafel (T) sichtbare Eckstücke (7) angeordnet sind, die an die Enden de rechtwinklig abgeschnittenen Rahmenprofile (P) anschließen.

12. Tafel nach Anspruch 11, dadurch gekennzeichnet, daß die Eckstücke (7) eine zylindrische Fläche (31) mit großem Radius aufweisen, die stufenlos in rechtwinklig zueinander stehende Flächen (32, 33) übergeht, die wiederum stufenlos in Außenflächen (34, 35) der Rahmenprofile (P) übergehen.

13. Tafel nach einem der Ansprüche 11 und 12, dadurch gekennzeichnet, daß die Eckstücke (7) aus Kunststoff bestehen, vorzugsweise als Kunststoff-Spritzteile ausgebildet sind.

14. Tafel nach einem der vorhergehenden Ansprüche, dadurch gekennzeichnet, daß die Eckstücke (7) Zapfen (26) aufweisen, die in die Rahmenprofile (P) eingesteckt sind.

15. Tafel nach einem der vorhergehenden Ansprüche, dadurch gekennzeichnet, daß die Rahmenprofile (P) durch Eckwinkel (6) miteinander verbunden sind, wobei ein Winkelschenkel (28) in eines der zu verbindenden Profile (P) und der andere Winkelschenkel (29) in das andere der zu verbindenden Profile (P) eingesteckt ist.

16. Tafel nach Anspruch 15, dadurch gekennzeichnet, daß die Eckstücke (7) nach den Ansprüchen 11 bis 15 die Eck-

- 4 -

bereiche (27) der Eckwinkel (6) so umschließen, daß die Eckwinkel (6) unsichtbar sind.

1/2

0109565

Fig.1

Fig. 3

Fig. 5

_Fig. 2_

_Fig. 4_